# EUROPÄISCHE PATENTANMELDUNG

(11) **EP 4 763 533 A1**
(43) Veröffentlichungstag der Anmeldung: **24.06.2026**
(21) Anmeldenummer: 25220097.7
(22) Anmeldetag: 02.12.2025
(51) Int. Cl.: B60C 1/00, C08C 19/20, C08C 19/25, C08L 7/00

(54) **SCHWEFELVERNETZBARE KAUTSCHUKMISCHUNG FÜR DIE GUMMIERUNG EINES FESTIGKEITSTRÄGERS, FESTIGKEITSTRÄGER UND FAHRZEUGREIFEN**

(30) Priorität: 17.12.2024 DE 102024138433
(71) Anmelder: Continental Reifen Deutschland GmbH, 30175 Hannover (DE)
(72) Erfinder: Weber, Christian, 30175 Hannover (DE); Francke, Martin, 30175 Hannover (DE)
(74) Vertreter: Continental Corporation

(57) **Zusammenfassung**

Die Erfindung betrifft eine schwefelvernetzbare Kautschukmischung für die Gummierung eines Festigkeitsträgers, die Mischung umfassend
(a) einen oder mehr als einen Polyisopren-Kautschuk in einer Gesamtmenge in einem Bereich von 40 bis 100 phr;
(b) einen oder mehr als einen von (a) verschiedenen Dienkautschuk in einer Gesamtmenge in einem Bereich von 0 bis 60 phr;
(c) ein oder mehr als ein flüssiges Polymer;
(d) einen oder mehr als einen Füllstoff; und
(e) mindestens ein Methylen-Donor / Methylen-Akzeptor Reaktionspaar, Vorkondensate und/oder Harze daraus;
wobei
das flüssige Polymer gemäß c) mittels Organosilizium-Gruppen organosilizium-modifiziert ist und einen jeweils durchschnittlichen Modifizierungsgrad von 8 oder mehr Organosilizium-Gruppen pro 100 Monomere aufweist. Ferner betrifft die Erfindung einen entsprechenden Festigkeitsträger sowie einen Fahrzeugreifen, der solch einen Festigkeitsträger in wenigstens einem Bauteil aufweist.

## Beschreibung

Die Erfindung betrifft eine schwefelvernetzbare Kautschukmischung für die Gummierung eines Festigkeitsträgers, die Mischung umfassend neben mindestens einem Polyisopren-Kautschuk in einer Gesamtmenge in einem Bereich von 40 bis 100 phr unter anderem zusätzlich ein oder mehr als ein flüssiges Polymer, das mittels Organosilizium-Gruppen organosilizium-modifiziert ist und einen jeweils durchschnittlichen Modifizierungsgrad von 8 oder mehr Organosilizium-Gruppen pro 100 Monomere aufweist. Ferner betrifft die Erfindung einen entsprechenden Festigkeitsträger (d.h. einen entsprechend gummierten Festigkeitsträger) sowie einen Fahrzeugreifen, der solch einen Festigkeitsträger in wenigstens einem Bauteil aufweist.

Die Fahreigenschaften eines Reifens, insbesondere Fahrzeugluftreifens, sind in maßgeblichem Umfang von der Kautschukmischung der einzelnen Bauteile abhängig. Daher werden hohe Anforderungen an die Zusammensetzungen dieser Mischungen gestellt. So wurden vielfältige Versuche unternommen, die Eigenschaften des Reifens durch die Variation der Polymerkomponenten, der Füllstoffe und der sonstigen Zuschlagstoffe in den Mischungen positiv zu beeinflussen. Dabei muss berücksichtigt werden, dass eine Verbesserung in einer Reifeneigenschaft oft eine Verschlechterung einer anderen Eigenschaft mit sich bringt (Zielkonflikt). Beispielsweise führt eine Verbesserung des Rollwiderstands, d.h. eine Reduzierung des Widerstands typischerweise zu einer Verschlechterung der Steifigkeit und häufig zusätzlich zu einer Verschlechterung der Rissbeständigkeit. Eine hohe Steifigkeit dient z.B. der Verbesserung der Haltbarkeit, zum Beispiel wenn Mischungen als Gummierungsmischungen für Festigkeitsträger eingesetzt werden sollen.

Typischerweise wird insbesondere eine höhere Steifigkeit durch Erhöhung des Füllstoffgehalts oder durch Erniedrigung des Weichmachergehalts erreicht. Aufgrund des oben bereits angedeuteten Zielkonflikts geht dies üblicherweise mit negativen Auswirkungen auf andere wichtige Reifeneigenschaften einher. Eine Erhöhung des Füllstoffgehalts führt üblicherweise zu einer Erhöhung, d.h. Verschlechterung, des Rollwiderstands und einer damit einhergehenden Zunahme der Wärmeentwicklung. In der Praxis ist man aber regelmäßig bestrebt, den Energieverbrauch eines Reifens kontinuierlich zu senken, d.h. den Rollwiderstand zu erniedrigen.

Die Erniedrigung des Weichmachergehalts ist oftmals praktisch nicht weiter möglich, da dieser bereits vergleichsweise niedrig ist und oftmals kaum weiter gesenkt werden kann, ohne eine nachteilige Viskosität in einer entsprechenden Kautschukmischung zu bewirken.

Es ist bereits bekannt, dass neben typischen und hinlänglich bekannten Kautschuken insbesondere modifizierte Kautschuke (bzw. Polymere), inklusive flüssige Kautschuke, die Eigenschaften von Reifenbauteilen signifikant verändern können. Hierbei kommen oft unterschiedliche Mikrostrukturen zum Einsatz. Weiterhin lassen sich insbesondere Dienkautschuke mittels Endgruppenmodifizierungen, Kopplungen und/oder Hydrierungen signifikant modifizieren.

Es ist regelmäßig ein Bedürfnis, den oben genannten Zielkonflikt zu minimieren bzw. auf einem höheren Niveau zu lösen.

Der Erfindung liegt die Aufgabe zugrunde, eine schwefelvernetzbare Kautschukmischung speziell für die Gummierung eines Festigkeitsträgers bereitzustellen, die einerseits einen verringerten Rollwiderstand aufweist, ohne dabei signifikante Kompromisse bei der Steifigkeit sowie Rissbeständigkeit einzugehen.

Gelöst wird diese Aufgabe erfindungsgemäß durch eine schwefelvernetzbare Kautschukmischung für die Gummierung eines Festigkeitsträgers, die Mischung umfassend:
(a) einen oder mehr als einen Polyisopren-Kautschuk in einer Gesamtmenge in einem Bereich von 40 bis 100 phr;
(b) einen oder mehr als einen von (a) verschiedenen Dienkautschuk in einer Gesamtmenge in einem Bereich von 0 bis 60 phr;
(c) ein oder mehr als ein flüssiges Polymer;
(d) einen oder mehr als einen Füllstoff; und
(e) mindestens ein Methylen-Donor / Methylen-Akzeptor Reaktionspaar, Vorkondensate und/oder Harze daraus;
wobei
das flüssige Polymer gemäß c) mittels Organosilizium-Gruppen organosilizium-modifiziert ist und einen jeweils durchschnittlichen Modifizierungsgrad von 8 oder mehr Organosilizium-Gruppen pro 100 Monomere aufweist.

Im Kontext der vorliegenden Erfindung gelten die flüssigen Polymere gemäß (c) als hochmodifizierte, flüssige Polymere. Es hat sich in eigenen Versuchen überraschend gezeigt, dass ein flüssiges Polymer wie vorstehend und weiter im Text beschrieben zu einer verbesserten Lösung des oben genannten Zielkonflikts führt und den Rollwiderstand signifikant reduziert, ohne Kompromisse bei der Steifigkeit bzw. der Rissbeständigkeit eingehen zu müssen (siehe auch Beispiele unten). Vielmehr wird sogar eine Verbesserung der Rissbeständigkeit erreicht. Dies betrifft Kautschukmischungen, die erfindungsgemäß zudem einen oder mehr als einen Polyisopren-Kautschuk wie in (a) definiert, umfassen.

Der Modifizierungsgrad, im Kontext des vorliegenden Textes, ist dabei generell eine Anzahl an Organosilizium-Gruppen pro 100 Monomere des entsprechenden Polymers gemäß (c). Dabei wird das gesamte Polymer berücksichtigt, so dass sich ein durchschnittlicher Modifizierungsgrad ergibt.

Im Kontext der vorliegenden Erfindung bedeutet ein flüssiges Polymer gemäß c) zunächst ganz allgemein, dass es für sich allein gesehen und referenziert auf eine Temperatur von 25°C im flüssigen Zustand bzw. Aggregatzustand vorliegt, wohingegen der eine oder mehr als eine feste Dienkautschuk gemäß a) bei identischer Referenztemperatur im festen Zustand vorliegt. Ein flüssiger Zustand liegt vorzugsweise bei einer Viskosität gemäß Brookfield-Methode (Methode nach DIN EN ISO 2555) von maximal 100000 mPas, insbesondere von 500 bis 30000 mPas, vor.

Die vorliegende Erfindung erlaubt es, den oben beschriebenen Zielkonflikt zu minimieren und stattdessen auf einem verbesserten Niveau zu lösen.

Im Kontext der vorliegenden Erfindung bedeutet die verwendete Angabe phr (parts per hundred parts of rubber by weight) die in der Kautschukindustrie übliche Mengenangabe für Mischungen. Die Dosierung der Gewichtsteile wird dabei stets auf 100 Gewichtsteile der gesamten Masse aller in der Mischung vorhandenen festen Kautschuke bezogen bzw. referenziert.

Nachfolgend wird die schwefelvernetzbare Kautschukmischung im Detail beschrieben.

Die erfindungsgemäße Kautschukmischung ist als Gummierung für Festigkeitsträger besonders geeignet. Daher ist die erfindungsgemäße Kautschukmischung gleichermaßen als Gummierungsmischung zu bezeichnen.

Gummierungsmischungen wie die erfindungsgemäße Kautschukmischung bilden zusammen mit einem Festigkeitsträger einen heterogenen Verbund, der eine ausreichend hohe Anhaftung an den Grenzflächen zwischen Festigkeitsträger und Kautschukmischung erfordert.

Zur Erreichung der erforderlichen Anhaftung umfassen Gummierungsmischungen wie die vorliegende erfindungsgemäße Kautschukmischung typischerweise ein sogenanntes Haftsystem, welches üblicherweise auf Basis eines Methylen-Donor / Methylen-Akzeptor Reaktionspaares, Vorkondensate und/oder Harze daraus, basiert.

Zur Verbesserung der Anhaftung insbesondere gegenüber metallischen Festigkeitsträgern, vorzugsweise aus Stahl, besonders bevorzugt vermessingter Stahl, werden Kobaltverbindungen eingesetzt. Bevorzugt ist daher eine erfindungsgemäße Kautschukmischung zusätzlich umfassend
(f) mindestens ein organisches und/oder anorganisches Kobaltsalz.

Besonders bevorzugt sind organische Kobaltsalze, ganz besonders ausgewählt aus der Gruppe bestehend aus Kobaltstearat, Kobaltborat, Kobaltborat-alkanoat, Kobaltnaphthenat, Kobaltrhodinat, Kobaltoctoat und Kobaltadipat.

Bevorzugt ist eine erfindungsgemäße Kautschukmischung, vorzugsweise wie als bevorzugt beschrieben, wobei das mindestens eine organische und anorganische Kobaltsalz gemäß (f) in einer Gesamtmenge von 0,1 bis 5 phr vorliegt, vorzugsweise von 0,15 bis 4 phr, weiter bevorzugt von 0,2 bis 3 phr, insbesondere bevorzugt von 0,25 bis 2 phr, noch weiter bevorzugt von 0,3 bis 1 phr, ganz besonders bevorzugt von 0,35 bis 0,5 phr.

Die erfindungsgemäße Kautschukmischung umfasst gemäß (a) einen oder mehr als einen Polyisopren-Kautschuk in einer Gesamtmenge in einem Bereich von 40 bis 100 phr. Vorzugsweise handelt es sich dabei um feste Kautschuke, referenziert auf eine Temperatur von 25°C.

Besonders bevorzugt ist eine erfindungsgemäße Kautschukmischung, vorzugsweise wie als bevorzugt beschrieben, wobei der eine oder mehr als eine Polyisopren-Kautschuk gemäß (a) der überwiegende Kautschuk in der Mischung ist (d.h. mit vorzugsweise mindestens 51 phr vorliegt) und somit die erfindungsgemäße Kautschukmischung in ihrer Basis eine auf Polyisopren beruhende Kautschukmischung ist.

Bevorzugt ist eine erfindungsgemäße Kautschukmischung, vorzugsweise wie als bevorzugt beschrieben, wobei der eine oder mehr als eine Polyisopren-Kautschuk gemäß (a) in einer Gesamtmenge von 45 bis 99 phr vorliegt, vorzugsweise von 51 bis 97 phr, weiter bevorzugt von 58 bis 95 phr, insbesondere bevorzugt von 65 bis 93 phr, noch weiter bevorzugt von 71 bis 91 phr, ganz besonders bevorzugt von 77 bis 89 phr. In diesen bevorzugten Mengenbereichen liegen der Kautschukmischung zunehmend verbesserte Reißeigenschaften zugrunde. Vorzugsweise wird der zu 100 phr verbliebene Anteil von dem von (a) verschiedenen Dienkautschuk gemäß (b) aufgefüllt.

Bevorzugt ist eine erfindungsgemäße Kautschukmischung, vorzugsweise wie als bevorzugt beschrieben, wobei der eine oder mehr als eine Polyisopren-Kautschuk gemäß (a) mindestens einen natürlichen Polyisopren-Kautschuk (auch bekannt als und gleichbedeutend mit den Begriffen Naturkautschuk oder natürlicher Kautschuk: abgekürzt mit "NR"), mindestens einen synthetischen Polyisopren-Kautschuk (abgekürzt mit "IR") und/oder mindestens einen epoxidierten Polyisopren-Kautschuk (ENR) umfasst; vorzugsweise mindestens einen natürlichen Polyisopren-Kautschuk (NR) und/oder mindestens einen synthetischen Polyisopren-Kautschuk (IR), besonders bevorzugt mindestens einen natürlichen Polyisopren-Kautschuk (NR). Vorzugsweise umfasst der eine oder mehr als eine Polyisopren-Kautschuk gemäß (a) ausschließlich einen oder mehr als einen natürlichen Polyisopren-Kautschuk (NR), besonders bevorzugt wie nachfolgend als bevorzugt beschrieben.

Natürliches Polyisopren (NR) bedeutet einen Kautschuk, der durch Ernte von natürlichen Quellen wie Kautschukbäumen (Hevea brasiliensis) oder nicht-Kautschukbaumquellen (wie z. B. Guayule oder Löwenzahn (z. B. Taraxacum koksaghyz)) gewonnen wird. Zudem wird im Kontext der vorliegenden Erfindung unter natürlichem Polyisopren (NR) kein synthetisches Polyisopren (IR) verstanden, sondern ist davon zu unterscheiden.

Vorzugsweise umfasst der eine oder mehr als eine Polyisopren-Kautschuk gemäß (a) mindestens einen *cis*-1,4-Polyisopren-Kautschuk und/oder mindestens einen 3,4-Polyisopren-Kautschuk. Dies gilt vorzugsweise unabhängig davon, ob es sich um einen natürlichen oder synthetischen Polyisopren-Kautschuk handelt. Bevorzugt ist mindestens ein *cis*-1,4-Polyisopren-Kautschuk mit besonders bevorzugt einem *cis*-1,4 Anteil größer 90 Gew.-%. Solch ein Polyisopren-Kautschuk wird vorzugsweise durch stereospezifische Polymerisation in Lösung mit Ziegler-Natta-Katalysatoren oder unter Verwendung von fein verteiltem Lithiumalkylen erhalten. Weiterhin handelt es sich typischerweise auch bei Naturkautschuk (NR) um einen solchen *cis*-1,4 Polyisopren-Kautschuk. Besonders bevorzugt ist daher mindestens ein Naturkautschuk (NR) umfassend mindestens einen *cis-*1,4-Polyisopren-Kautschuk, vorzugsweise mit einem *cis*-1,4-Anteil größer oder gleich 99 Gew.-%.

Der eine oder mehr als eine Polyisopren-Kautschuk gemäß (a) weist vorzugsweise ein gewichtsmittleres Molekulargewicht Mw gemäß GPC in einem Bereich von 250.000 bis 5.000.000 g/mol auf. Es gehört somit zu den hochmolekularen Kautschuken, die in die Hundert Teile bei der Berechnung der phr-Bezugsgröße eingehen.

Die erfindungsgemäße Kautschukmischung umfasst zudem gemäß (b) einen oder mehr als einen von (a) verschiedenen Dienkautschuk in einer Gesamtmenge in einem Bereich von 0 bis 60 phr. Somit ist der eine oder mehr als eine Dienkautschuk gemäß (b) optional. Bevorzugt ist jedoch eine erfindungsgemäße Kautschukmischung, vorzugsweise wie als bevorzugt beschrieben, umfassend einen oder mehr als einen Dienkautschuk gemäß (b), d.h. der eine oder mehr als eine von (a) verschiedene Dienkautschuk ist in der erfindungsgemäßen Kautschukmischung vorhanden. Vorzugsweise ist die Gesamtmenge von (b) größer 0 (Null) phr und beträgt maximal 60 phr.

Im Kontext der vorliegenden Erfindung ist ein Dienkautschuk durch Polymerisation oder Copolymerisation von Dienen und/oder Cycloalkenen entstanden und weist somit entweder in der Hauptkette oder in den Seitenketten C=C-Doppelbindungen auf. Typische Monomere für eine Polymerisation umfassen Isopren und Butadien.

Vorzugsweise handelt es sich bei dem einen oder mehr als einen von (a) verschiedenen Dienkautschuk um feste Dienkautschuke, referenziert auf eine Temperatur von 25°C.

Vorzugsweise bildet der eine oder mehr als eine von (a) verschiedene Dienkautschuk nicht den mengenmäßig größten Anteil der Kautschuke in der erfindungsgemäßen Kautschukmischung. Bevorzugt ist die Gesamtmenge von (b) kleiner 50 phr.

Besonders bevorzugt ist eine erfindungsgemäße Kautschukmischung, wobei der eine oder mehr als eine von (a) verschiedene Dienkautschuk (d.h. gemäß (b)) in einer Gesamtmenge von 1 bis 55 phr vorliegt, vorzugsweise von 3 bis 49 phr, weiter bevorzugt von 5 bis 42 phr, insbesondere bevorzugt von 7 bis 35 phr, noch weiter bevorzugt von 9 bis 29 phr, ganz besonders bevorzugt von 11 bis 23 phr. Vorzugsweise wird der zu 100 phr verbliebene Anteil von dem einen oder mehr als einen Polyisopren-Kautschuk gemäß (a) aufgefüllt.

Vorzugsweise umfasst der eine oder mehr als eine von (a) verschiedene Dienkautschuk (d.h. gemäß (b)) einen oder mehr als einen Styrol-Butadien-Kautschuk (SBR), einen oder mehr als einen Butadien-Isopren-Kautschuk, einen oder mehr als einen hydrierten Styrol-Butadien-Kautschuk, und/oder einen oder mehr als einen Butadien-Kautschuk (BR); vorzugsweise einen oder mehr als einen Butadien-Kautschuk (BR); besonders bevorzugt ausschließlich einen oder mehr als einen Butadien-Kautschuk (BR). Im Falle eines Styrol-Butadien-Kautschuks (SBR), handelt es sich vorzugsweise um einen festen Styrol-Butadien-Kautschuk (SBR), referenziert auf eine Temperatur von 25°C. In jedem Fall handelt es sich um einen von (c) verschiedenen Styrol-Butadien-Kautschuk (SBR). Besonders bevorzugt umfasst der eine oder mehr als eine Styrol-Butadien-Kautschuk (SBR) mindestens einen lösungspolymerisierten Styrol-Butadien-Kautschuk (SSBR) und/oder mindestens einen emulsionspolymerisierten Styrol-Butadien-Kautschuk (ESBR).

Besonders bevorzugt umfasst der eine oder mehr als eine Butadien-Kautschuk (BR) einen sogenannten hoch-cis Butadien-Kautschuk (BR), vorzugsweise mit einem cis-Anteil von 90% oder mehr, besonders bevorzugt von 95% oder mehr, ganz besonders bevorzugt von 98% oder mehr.

In manchen Fällen ist eine erfindungsgemäße Kautschukmischung bevorzugt, vorzugsweise wie als bevorzugt beschreiben, wobei der eine oder mehr als eine von (a) verschiedenen Dienkautschuk jeweils ein gewichtsmittleres Molekulargewicht Mw gemäß GPC in einem Bereich von 150.000 bis 1.100.000 g/mol aufweist.

Bevorzugt ist eine erfindungsgemäße Kautschukmischung, vorzugsweise wie als bevorzugt beschrieben, wobei die Gesamtmenge von (a) mindestens der zweifachen Gesamtmenge von (b) entspricht, besonders bevorzugt mindestens der dreifachen Gesamtmenge.

Ganz besonders bevorzugt ist eine erfindungsgemäße Kautschukmischung, vorzugsweise wie als bevorzugt beschrieben, umfassend für (a) einen oder mehr als einen natürlichen Polyisopren-Kautschuk (NR) und für (b) einen oder mehr als einen Butadien-Kautschuk (BR), wobei vorzugsweise die Gesamtmenge von (a) größer als die Gesamtmenge von (b) ist, besonders bevorzugt die Gesamtmenge von (a) mindestens der zweifachen Gesamtmenge von (b) entspricht, besonders bevorzugt der dreifachen Gesamtmenge von (b).

In manchen Fällen ist eine erfindungsgemäße Kautschukmischung bevorzugt, vorzugsweise wie als bevorzugt beschrieben, wobei einer, mehrere oder alle des einen oder mehr als einen von (a) verschiedenen Dienkautschuks gemäß (b) durch Substituenten modifiziert ist, so dass ein modifizierter Dienkautschuk resultiert. Vorzugsweise handelt es sich um einen oder mehrere Substituenten, welche vorzugsweise am Polymer-Rückgrat und/oder endständig vorliegen. Diese Substituenten bewirken besonders bevorzugt eine weitere Wechselwirkung mit dem einen oder mehr als einen Füllstoff gemäß (d), insbesondere mit Füllstoffen, die eine polare Oberfläche bzw. polare funktionelle Gruppen aufweisen, wie beispielswiese Kieselsäure-Füllstoffe. Andere Substituenten wiederum ermöglichen eine Wechselwirkung vorzugsweise mit unpolaren Füllstoffen, wie beispielsweise Ruße. Solche Kautschuke werden typischerweise auch funktionalisierte Kautschuke genannt.

Vorzugsweise sind diese Substituenten (d.h. für Kautschuke gemäß (b)) unabhängig voneinander ausgewählt aus der Gruppe bestehend aus Hydroxy-Gruppen, EthoxyGruppen, Epoxy-Gruppen, Amino-Gruppen, Ammonium-Gruppen, Aminosiloxan-Gruppen, Carboxy-Gruppen, Phthalocyanin-Gruppen und Silicium-enthaltende Gruppen. Bevorzugte Silicium-enthaltende Gruppen umfassen Silan und/oder Siloxan-Gruppen. Die Auswahl der Substituenten ist jedoch vorzugsweise nicht auf die vorstehend genannten beschränkt. In einigen Fällen umfassen die Substituenten zudem vorzugsweise ein oder mehrere Metalle, umfassend Metallatome und/oder Metallionen. Insbesondere die Amino- und Ammonium-Gruppen treten vorzugsweise mit Rußen in Wechselwirkung.

Vorzugsweise weisen solche funktionalisierten Kautschuke einen Funktionalisierungsgrad auf, der geringer ist als der Funktionalisierungsgrad für das flüssige Polymer gemäß (c), besonders bevorzugt einen jeweils durchschnittlichen Funktionalisierungsgrad kleiner 8 Substituenten pro 100 Monomere, besonders bevorzugt kleiner 4, weiter bevorzugt kleiner 2, am bevorzugtesten kleiner 1.

In anderen Fällen ist eine erfindungsgemäße Kautschukmischung bevorzugt, vorzugsweise wie als bevorzugt beschrieben, wobei der eine oder mehr als eine von (a) verschiedene Dienkautschuk nicht durch Substituenten modifiziert ist, d.h. es liegen unmodifizierte bzw. unfunktionalisierte Kautschuke für (b) vor. In wieder anderen Fällen ist es bevorzugt, dass sowohl funktionalisierte als auch unfunktionalisierte Kautschuke vorliegen.

Die Glasübergangstemperatur T_{g} eines eingesetzten Kautschuks hat typischerweise einen Einfluss auf die Wärmeentwicklung bzw. Hysterese der entsprechenden Kautschukmischung und somit letztendlich auch auf den Rollwiderstand des gesamten Reifens. Bevorzugt ist eine erfindungsgemäße Kautschukmischung, vorzugsweise wie als bevorzugt beschrieben, wobei der eine oder mehr als eine von (a) verschiedene Dienkautschuk gemäß (b) jeweils eine individuelle maximale Glasübergangstemperatur T_{g} von -20 °C aufweist oder weniger, weiter bevorzugt von -30 °C oder weniger, noch bevorzugter von -40 °C oder weniger, noch weiter bevorzugt von -50 °C oder weniger, am bevorzugtesten von -60 °C oder weniger, ganz besonders bevorzugt von -80 °C oder weniger. Besonders bevorzugt weist der eine oder mehr als eine von (a) verschiedene Dienkautschuk gemäß (b) jeweils eine individuelle Glasübergangstemperatur T_{g} in einem Bereich von -41 bis -115 °C, vorzugsweise von -62 bis -115 °C, weiter vorzugsweise von - 83 bis -115 °C. Grundsätzlich stellt -115 °C eine bevorzugte Untergrenze auch zu den oben genannten Obergrenzen (-20 °C, -30 °C, usw.) dar.

Im Kontext der vorliegenden Erfindung wird die Glasübergangstemperatur T_{g} der Polymere bzw. Kautschuke anhand von Dynamischer Differenz-Kalorimetrie bestimmt (DSC, engl. Dynamic Scanning Calorimetry, gemäß DIN 53765: 1994-03 bzw. ISO 11357-2: 1999-03, Kalibrierte DSC mit Tieftemperatureinrichtung, Kalibrierung nach Gerätetyp und Herstellerangaben, Probe im Aluminiumtiegel mit Aluminiumdeckel, Abkühlung auf Temperaturen niedriger als -120 °C mit 10 °C/min).

Wie bereits oben ausgeführt, umfasst die erfindungsgemäße Kautschukmischung gemäß (c) ein oder mehr als ein flüssiges Polymer, welches mittels Organosilizium-Gruppen organosilizium-modifiziert ist und einen jeweils durchschnittlichen Modifizierungsgrad von 8 oder mehr Organosilizium-Gruppen pro 100 Monomere aufweist. Es handelt sich somit um ein funktionalisiertes Polymer. Im Kontext der vorliegenden Erfindung ist das Polymer gemäß (c) kein Kautschuk gemäß (a) und (b). Im Kontext der vorliegenden Erfindung befinden sich die Organosilizium-Gruppen mindestens entlang des Rückgrates, d.h. entlang der Kette, des einen oder mehr als einen flüssigen Polymers. Dabei kommt es nicht auf eine exakt gleichmäßige Verteilung der Organosilizium-Gruppen über das gesamte Polymer an. Vorzugsweise handelt es sich um eine statistische Verteilung, die sich aus der Synthese ergibt.

Bevorzugt ist eine erfindungsgemäße Kautschukmischung, wobei das eine oder mehr als eine flüssige Polymer gemäß (c) mindestens ein flüssiges Styrol-Butadien-Polymer (LSBR) und/oder mindestens ein flüssiges Polybutadien-Polymer (LBR) umfasst, vorzugsweise jeweils und unabhängig voneinander mit einem zahlenmittleren Molekulargewicht Mₙ gemäß GPC (mittels Styrol-Standard und gemäß ISO 13885) in einem Bereich von 4000 bis 30000 g/mol, vorzugsweise von 5500 bis 27000 g/mol, weiter bevorzugt von 7000 bis 24000 g/mol, wieder weiter bevorzugt von 8500 bis 21000 g/mol, bevorzugter von 10000 bis 18000 g/mol, am bevorzugtesten von 12000 bis 15000 g/mol. Besonders bevorzugt wird eine Obergrenze von 30000 g/mol nicht überschritten, da sich in den meisten Fällen eine entsprechende Kautschukmischung nur noch schwer bis kaum verarbeiten lässt. Ganz ähnlich wird die Untergrenze von 4000 g/mol nicht unterschritten, da unterhalb dieser Grenze kaum signifikante Zunahmen der Steifigkeit beobachtet wurden. In den weiter bevorzugten Bereichen werden üblicherweise signifikante bis gute Zunahmen der Steifigkeit bei akzeptabler bis guter Verarbeitbarkeit erreicht, wobei sich diese Effekte weiter verbessern, je weiter einer der weiter bevorzugteren Bereiche realisiert wird.

Besonders bevorzugt umfasst das eine oder mehr als eine flüssige Polymer gemäß (c) ausschließlich mindestens ein flüssiges Styrol-Butadien-Polymer (LSBR) und/oder mindestens ein flüssiges Polybutadien-Polymer (LBR), vorzugsweise wie vorstehend definiert.

In manchen Fällen ist eine erfindungsgemäße Kautschukmischung bevorzugt, wobei das eine oder mehr als eine flüssige Polymer gemäß (c) mindestens ein flüssiges Styrol-Butadien-Polymer (LSBR) umfasst, vorzugsweise ausschließlich. Das vorstehend Gesagte zum zahlenmittleren Molekulargewicht gilt vorzugsweise entsprechend.

In anderen Fällen ist eine erfindungsgemäße Kautschukmischung bevorzugt, wobei das eine oder mehr als eine flüssige Polymer gemäß (c) mindestens ein flüssiges Polybutadien-Polymer (LBR) umfasst, vorzugsweise ausschließlich. Das vorstehend Gesagte zum zahlenmittleren Molekulargewicht gilt vorzugsweise entsprechend.

Besonders bevorzugt ist eine erfindungsgemäße Kautschukmischung, wobei die Organosilizium-Gruppen sowohl mindestens ein Siliziumatom aufweisen als auch mindestens eine Alkoxygruppe und/oder Hydroxygruppe.

Ganz besonders bevorzugt ist eine Kautschukmischung gemäß der vorliegenden Erfindung, wobei die Organosilizium-Gruppen unabhängig voneinander eine Struktur gemäß Formel (I) aufweisen:

(R¹R²R³)Si-X- (I),

wobei jeweils unabhängig voneinander gilt
- R¹, R² und R³ sind ausgewählt aus der Gruppe bestehend aus Methoxy, Ethoxy, Phenoxy, Methyl, Ethyl und Phenyl, wobei jeweils wenigstens eine der Gruppen R¹, R² und R³ Methoxy, Ethoxy oder Phenoxy ist, und
- X ein C₁ bis C₁₈ divalentes Alkylen ist, vorzugsweise ein C₁ bis C₁₄, weiter bevorzugt ein C₁ bis C₁₀, bevorzugter ein C₁ bis C₇, weiter bevorzugter ein C₁ bis C₅, am bevorzugtesten ein C₂ bis C₄, am besonders bevorzugtesten Propylen.

Im Kontext der vorliegenden Erfindung bedeutet "divalentes Akylen" ein Alkandiyl. Es weist zwei Valenzen auf. Vorzugsweise ist es linear oder verzweigt, besonders bevorzugt linear. Vorzugsweise umfasst "Propylen" eine -CH(CH₃)CH₂- oder eine (besonders bevorzugte) - CH₂-CH₂-CH₂- Gruppe.

Vorstehend genannte, spezifische Organosilizium-Gruppen zeigten in entsprechenden Kautschukmischungen einen äußerst guten Effekt hinsichtlich eines verminderten Rollwiderstandes bei gleichzeitig sehr guter Steifigkeit und Rissbeständigkeit. Besonders Gruppen mit X umfassend 1 bis 3 Kohlenstoffatome zeigten sehr häufig vorteilhafte Wechselwirkungen mit anderen Mischungsbestandteilen.

Vorzugsweise sind die Reste R¹, R² und R³ in Formel (I) identisch.

Vorzugsweise sind die Reste R¹, R² und R³ in Formel (I) Methoxy- und/oder EthoxyGruppen.

Besonders bevorzugt ist eine Kautschukmischung gemäß der vorliegenden Erfindung, vorzugsweise wie vorstehend und/oder nachstehend als bevorzugt beschrieben, wobei die Organosilizium-Gruppen Propyl-Trialkoxysilyl-Gruppen umfassen (vorzugsweise ausschließlich sind), besonders bevorzugt Propyl-Triethoxysilyl-Gruppen umfassen (vorzugsweise ausschließlich sind).

Im Kontext der vorliegenden Erfindung bedeutet "unabhängig voneinander" sowohl unabhängig von weiteren Organosilizium-Gruppen im selben Polymer als auch von Organosilizium-Gruppen in anderen flüssigen Polymeren gemäß (c), sofern mehr als ein flüssiges Polymer gemäß (c) vorliegt.

Besonders bevorzugt ist eine erfindungsgemäße Kautschukmischung, wobei das eine oder mehr als eine flüssige Polymer gemäß (c) eine individuelle Glasübergangstemperatur Tg gemäß DSC in einem Bereich von -120 bis -35°C aufweist, bevorzugt von -100 bis -45°C, weiter bevorzugt von -90 bis -55°C, am bevorzugtesten von -75 bis -58°C.

Zudem weist das eine oder mehr als eine flüssige Polymer gemäß (c), vorzugsweise wie vorstehend als bevorzugt beschrieben, einen jeweils durchschnittlichen Modifizierungsgrad auf. Im Kontext der vorliegenden Erfindung bedeutet dies, dass sich, sofern lediglich ein flüssiges Polymer gemäß (c) vorliegt, der durchschnittliche Modifizierungsgrad genau auf dieses eine Polymer bezieht, der im Bereich von 8 oder mehr Organosilizium-Gruppen pro 100 Monomere liegt. Für dieses eine Polymer wird der durchschnittliche bzw. gemittelte (mittlere) Modifizierungsgrad berücksichtigt, der sich auf 100 Monomere bezieht. Im Kontext der vorliegenden Erfindung bedeutet Monomer bzw. Monomere jede einzelne individuelle strukturelle Untereinheit, aus die ein entsprechendes Polymer allgemein bzw. die besonders bevorzugten Polymere insbesondere aufgebaut sind. Das bedeutet beispielsweise, ein flüssiges Styrol-Butadien-Polymer umfasst als strukturelle Untereinheit mindestens Styrol-Monomere und Butadien-Monomere. Dementsprechend wird jede einzelne strukturelle Untereinheit als Monomer betrachtet. Der Modifizierungsgrad wird auf eine Anzahl von 100 solcher Monomere referenziert. Umfasst die Kautschukmischung gemäß (c) mehr als ein flüssiges Polymer, so weist jedes Polymer einen eigenen (individuellen, d.h. jeweils bzw. jeweiligen) aber weiterhin im Durchschnitt betrachteten Modifizierungsgrad innerhalb der genannten Bereiche (inklusive bevorzugter Bereiche) auf. Diese Betrachtung für den Modifizierungsgrad gilt vorzugsweise auch für Kautschuke, die im Kontext der vorliegenden Erfindung nicht unter (c) fallen, falls diese mittels Substituenten modifiziert vorliegen und Modifizierungsgrade zwischen (b) und (c) der erfindungsgemäßen Kautschukmischung verglichen werden müssen.

Bevorzugt ist eine erfindungsgemäße Kautschukmischung, vorzugsweise wie vorstehend und/oder nachstehend als bevorzugt beschrieben, wobei der jeweilige, durchschnittliche Modifizierungsgrad des einen oder mehr als einen flüssigen Polymers gemäß (c) im Bereich von 8 bis 30 liegt, vorzugsweise von 8,5 bis 25, weiter bevorzugt von 9 bis 20, wieder weiter bevorzugt von 9,5 bis 15, am bevorzugtesten von 10 bis 14. Besonders bevorzugt wird eine Obergrenze von 30 nicht überschritten, da einerseits die Darstellung solcher Modifizierungsgrade immer aufwendiger wird, andererseits die Zunahme der Steifigkeit immer geringer ausfällt, bis hin zu einer insignifikanten Steifigkeitszunahme. Ganz ähnlich wird die Untergrenze von 8 nicht unterschritten, da sonst in vielen Fällen eine unerwünschte Abnahme der Steifigkeit und Rissbeständigkeit beobachtet werden kann. In den oben genannten bevorzugten Bereichen verbessern sich sowohl die Hysterese-Eigenschaften als auch die Steifigkeit und Rissbeständigkeit. Typischerweise verbessern sich diese Eigenschaften zunehmend, je mehr einer der weiter bevorzugteren Bereiche realisiert wird.

Bevorzugt ist eine erfindungsgemäße Kautschukmischung, vorzugsweise wie als bevorzugt beschrieben, wobei das eine oder mehr als eine flüssige Polymer gemäß (c) in einer Gesamtmenge von 1 bis 25 phr vorliegt, vorzugsweise von 2 bis 21 phr, weiter vorzugsweise von 3 bis 17 phr, besonders bevorzugt von 4 bis 13 phr, weiter besonders bevorzugt von 5 bis 9 phr.

Besonders bevorzugt ist eine erfindungsgemäße Kautschukmischung, vorzugsweise wie als bevorzugt beschrieben, wobei das eine oder mehr als eine flüssige Polymer gemäß (c) mindestens ein flüssiges Styrol-Butadien-Polymer (LSBR) umfasst (vorzugsweise ausschließlich umfasst), und einen Styrol-Gehalt in einem Bereich von 5 bis 60 Gew.-% aufweist, bezogen auf die Gesamtmasse der unfunktionalisierten Monomere im Polymer, vorzugsweise von 9 bis 50 Gew.-%, weiter bevorzugt von 11 bis 40 Gew.-%, noch weiter bevorzugt von 13 bis 30 Gew.-%, am bevorzugtesten von 15 bis 23 Gew.-%.

Ein flüssiges Styrol-Butadien-Polymer gemäß (c) umfasst unter anderem polymerisierte Butadien-Monomere, deren Doppelbindungen im Polymer typischerweise in einer *cis-* oder trans-Konfiguration vorliegen. Besonders bevorzugt ist eine erfindungsgemäße Kautschukmischung, wobei das eine oder mehr als eine flüssige Polymer gemäß (c) mindestens ein flüssiges Styrol-Butadien-Polymer (LSBR) umfasst (vorzugsweise ausschließlich umfasst), und einen cis-Anteil in einem Bereich von 5 bis 50 %, vorzugsweise von 10 bis 42 %, weiter vorzugsweise von 15 bis 36 %, noch weiter vorzugsweise von 18 bis 30 %, am bevorzugtesten von 20 bis 26 %. Vorzugsweise beträgt der trans-Anteil mehr als 50 %, vorzugsweise liegt er in einem Bereich von 52 bis 75 %, weiter vorzugsweise von 55 bis 70 %, am bevorzugtesten von 58 bis 65 %. Vorzugsweise ist der trans-Anteil höher als der cis-Anteil, vorzugsweise mindestens doppelt so hoch.

Vorzugsweise umfasst ein flüssiges Styrol-Butadien-Polymer gemäß (c) Vinyl-Gruppen. Diese treten vorzugsweise vereinzelt über das gesamte Rückgrat auf und bilden typischerweise exponierte Doppelbindung aufgrund einer 1,2-Polymerisierung des Butadiens aus. Besonders bevorzugt ist eine erfindungsgemäße Kautschukmischung, wobei das eine oder mehr als eine flüssige Polymer gemäß (c) mindestens ein flüssiges Styrol-Butadien-Polymer (LSBR) umfasst (vorzugsweise ausschließlich umfasst), und einen Vinyl-Gehalt in einem Bereich von 5 bis 50 % aufweist, bezogen auf die Butadien-Monomere im Polymer, vorzugsweise von 8 bis 40 %, weiter bevorzugt von 12 bis 30 %, noch weiter bevorzugt von 15 bis 25 %. Besonders bevorzugt ist der Vinyl-Gehalt kleiner 20 %, vorzugsweise in einem Bereich von 15 bis 19 %.

Grundsätzlich gilt vorzugsweise die Maßgabe, dass die Summe aus trans-Anteil, cis-Anteil und Vinyl-Gehalt 100 % ergibt.

Die erfindungsgemäße Kautschukmischung umfasst zudem gemäß (d) einen oder mehr als einen Füllstoff, vorzugsweise ausgewählt aus der Gruppe bestehend aus Kieselsäuren und Rußen. Im Kontext der vorliegenden Erfindung haben die Begriffe Kieselsäure und Silica den gleichen Bedeutungsumfang und sind daher synonym.

Bevorzugt ist eine erfindungsgemäße Kautschukmischung, vorzugsweise wie als bevorzugt beschrieben, wobei der eine oder mehr als eine Füllstoff gemäß (d) in einer Gesamtmenge im Bereich von 20 bis 90 phr vorliegt, vorzugsweise von 30 bis 85 phr, weiter bevorzugt von 40 bis 80 phr, besonders bevorzugt von 50 bis 75 phr, am bevorzugtesten von 52 bis 72 phr.

Bevorzugt ist eine erfindungsgemäße Kautschukmischung, vorzugsweise wie als bevorzugt beschrieben, wobei der eine oder mehr als eine Füllstoff gemäß (d) mindestens einen Ruß und/oder mindestens eine Kieselsäure umfasst.

Besonders bevorzugt ist eine erfindungsgemäße Kautschukmischung, vorzugsweise wie als bevorzugt beschrieben, wobei der eine oder mehr als eine Füllstoff gemäß (d) mindestens einen Ruß und mindestens eine Kieselsäure umfasst, wobei, bezogen auf die Gesamtmenge an Füllstoff, vorzugsweise die Gesamtmenge an Kieselsäuren größer ist als die Gesamtmenge an Rußen, besonders vorzugsweise die Gesamtmenge an Kieselsäuren mindestens doppelt so groß ist wie die Gesamtmenge an Rußen, besonders bevorzugt mindestens vierfach so hoch, weiter bevorzugt mindestens sechsfach so hoch, insbesondere bevorzugt mindestens achtfach so hoch, am bevorzugtesten mindestens zehnfach so hoch, weiter am bevorzugtesten mindestens zwölffach so hoch.

Grundsätzlich ist bevorzugt, dass der Anteil der Gesamtmenge an Kieselsäuren an der Gesamtmenge des einen oder mehr als einen Füllstoffs gemäß (d) mehr als 50 Gew.-% beträgt, vorzugsweise 70 Gew.-% oder mehr, weiter vorzugsweise 80 Gew.-% oder mehr, am bevorzugtesten 90 Gew.-% oder mehr.

Vorzugsweise umfasst der eine oder mehr als eine Füllstoff gemäß (d) mindestens eine Kieselsäure in einer Gesamtmenge in einem Bereich von 15 bis 85 phr, wobei vorzugsweise die Gesamtmenge an Ruß in einem Bereich von 5 bis 10 phr liegt. Besonders bevorzugt umfasst der eine oder mehr als eine Füllstoff gemäß (d) mindestens eine Kieselsäure in einer Gesamtmenge in einem Bereich von 20 bis 90 phr, vorzugsweise von 30 bis 80 phr, weiter bevorzugt von 40 bis 75 phr, besonders bevorzugt von 50 bis 70 phr, am bevorzugtesten von 52 bis 67 phr, wobei die Gesamtmenge an Ruß in einem Bereich von 0 bis 20 phr liegt, vorzugsweise von 1 bis 15 phr, besonders bevorzugt von 2 bis 10 phr.

Das eine oder mehr als eine flüssige Polymer gemäß (c), vorzugsweise wie vorstehend als bevorzugt beschrieben, tritt vorzugsweise mittels der Organosilizium-Gruppen mit dem einen oder mehr als einen Füllstoff gemäß (d) in Wechselwirkung und verändert damit auf positive Weise die Eigenschaften der erfindungsgemäßen Kautschukmischung bzw. eines daraus resultierenden Reifens. Vorzugsweise tritt auch der eine oder mehr als eine von (a) verschiedene Dienkautschuk mit dem Füllstoff in Wechselwirkung, sofern der Dienkautschuk mit Substituenten modifiziert ist.

Vorzugsweise ist die mindestens eine Kieselsäure als Füllstoff ausgewählt aus der Gruppe bestehend aus amorphen Siliziumdioxiden und pyrogenen Siliziumdioxiden. Ein besonders bevorzugtes amorphes Siliziumdioxid umfasst gefällte Kieselsäure, die typischerweise auch als gefälltes Siliziumdioxid bezeichnet wird.

Vorzugsweise weist die mindestens eine Kieselsäure eine Stickstoff-Oberfläche (BET-Oberfläche) (gemäß DIN ISO 9277 und DIN 66132) im Bereich von 35 bis 400 m²/g, bevorzugt von 50 bis 350 m²/g, besonders bevorzugt von 85 bis 320 m²/g, ganz besonders bevorzugt von 120 bis 235 m²/g, und/oder (vorzugsweise und) mit einer CTAB-Oberfläche (gemäß ASTM D 3765) im Bereich von 30 bis 400 m²/g, bevorzugt von 50 bis 330 m²/g, besonders bevorzugt von 80 bis 300 m²/g, ganz besonders bevorzugt von 115 bis 200 m²/g. In manchen Fällen besonders bevorzugte Kieselsäure sind solche des Typs Ultrasil^{®} VN3 (Handelsname) der Firma Evonik. Weiter bevorzugt sind zudem hoch-dispergierbare Kieselsäuren (sogenannte HD-Kieselsäuren). Bevorzugte hoch-dispergierbare Kieselsäuren umfassen Zeosil^{®} 1165 MP der Firma Solvay und Ultrasil 7000 der Firma Evonik.

Als Ruß kommen grundsätzlich alle dem Fachmann bekannten Rußtypen in Frage. Bevorzugt ist der mindestens eine Ruß ausgewählt aus der Gruppe bestehend aus Industrierußen und Pyrolyse-Rußen, wobei Industrieruße bevorzugt sind.

Bevorzugt hat der mindestens eine Ruß eine Jodzahl, gemäß ASTM D 1510 (die auch als Jodadsorptionszahl bezeichnet wird), in einem Bereich von 30 bis 250 g/kg, bevorzugt von 40 bis 200 g/kg, besonders bevorzugt von 50 bis 150 g/kg, und ganz besonders bevorzugt von 60 bis 100 g/kg, und/oder eine DBP-Zahl, gemäß ASTM D 2414, in einem Bereich von 40 bis 200 ml/100 g, bevorzugt von 50 bis 130 ml/100 g, besonders bevorzugt von 55 bis 85 ml/100 g. Die DBP-Zahl gemäß ASTM D 2414 bestimmt das spezifische Absorptionsvolumen eines Rußes oder eines hellen Füllstoffes mittels Dibutylphthalat. Die Verwendung solcher Ruße in der erfindungsgemäßen Kautschukmischung liefert typischerweise sehr gute Ergebnisse. Besonders bevorzugt ist ein Ruß mit einer Jodzahl im Bereich von 70 bis 90 g/kg und einer DBP-Zahl im Bereich von 60 bis 80 ml/100 g. Ganz besonders bevorzugt ist ein Ruß des Typs N326. Weiter bevorzugt weist der Ruß eine CTAB-Oberfläche (gemäß ASTM D 3765) im Bereich von 40 bis 250 m²/g, bevorzugt von 55 bis 150 m²/g, besonders bevorzugt von 60 bis 100 m²/g, ganz besonders bevorzugt von 65 bis 85 m²/g.

In einigen Fällen ist eine erfindungsgemäße Kautschukmischung bevorzugt, vorzugsweise wie als bevorzugt beschrieben, wobei der mindestens eine Ruß als Begleitmaterial eines anderen Mischungsbestandteils (vorzugsweise einer Silanverbindung) in vergleichsweise geringen Mengen eingetragen wird, vorzugsweise in einer Gesamtmenge von 10 phr oder geringer.

Im Kontext der vorliegenden Erfindung gehört Zinkoxid nicht zu den Füllstoffen im Sinne der vorliegenden Erfindung, sondern zu bevorzugten weiteren Zusatzstoffen (siehe Text weiter unten zu weiteren Zusatzstoffen).

Die erfindungsgemäße Kautschukmischung umfasst zusätzlich (e) mindestens ein Methylen-Donor / Methylen-Akzeptor Reaktionspaar, Vorkondensate und/oder Harze daraus. Im Kontext der vorliegenden Erfindung bedeutet der Begriff "Vorkondensate [...] daraus", Oligomere von Methylen-Donor / Methylen-Akzeptor Monomeren. Dies umfasst mindesten zwei solcher Monomere und reicht in manchen Fällen bis 10, vereinzelt größer 10. Typische Molekulargewichtsbereiche liegen in einem Bereich von 200 bis 4000 g/mol, vorzugsweise von 400 bis 3000 g/mol. Grundsätzlich wird davon ausgegangen, dass Molekulargewichte größer 4000 g/mol bereits überwiegend einem Harz zugeordnet werden können. Dem Fachmann ist selbstverständlich klar, dass sich eine praktische Obergrenze aus der Verarbeitbarkeit solcher Harze (bzw. übergroßer Vorkondensate) ergibt. Sobald sie eine Festigkeit erreichen, so dass eine Einarbeitung in eine Kautschukmischung nicht mehr praktikabel ist, eignen sie sich auch nicht mehr für die Zwecke der vorliegenden Erfindung.

Bevorzugt ist eine erfindungsgemäße Kautschukmischung, vorzugsweise wie als bevorzugt beschrieben, wobei gemäß (e) das Reaktionspaar, die Vorkondensate und/oder die Harze daraus Formaldehyd, Hexamethylentetramin (HMTA), Hexamethoxymethylmelamin (HMMM), Resorcin, substituierte Resorcine, Phenol, substituierte Phenole, N-Methyldioxazinane und/oder Aceton umfassen bzw. darauf basieren. Dies umfasst, dass das Reaktionspaar, die Vorkondensate bzw. die Harze daraus aus den vorgenannten Verbindungen eine, zwei, oder mehr als zwei umfassen bzw. darauf basieren.

Im Kontext der vorliegenden Erfindung bedeutet "darauf basieren", dass sie aus den zuvor genannten Verbindungen (auch als Monomere bezeichnet) gebildet werden bzw. daraus aufgebaut sind oder zumindest überwiegend oder zumindest anteilig daraus gebildet bzw. aufgebaut sind. Es sind somit beispielsweise auch solche Vorkondensate umfasst, die weitestgehend aus kondensierten Phenolen aufgebaut sind aber zusätzlich endständig mit einem Substituenten versehen sind, der vorstehend nicht aufgezählt ist. Beispielsweise zählen dazu auch solche Vorkondensate, die weitestgehend oder anteilig aus Formaldehyd aufgebaut sind, ohne selbst noch signifikante Mengen an freiem Formaldehyd zu enthalten.

Im Kontext der vorliegenden Erfindung wird Resorcin (d.h. 1,3-Dihydroxybenzol) nicht als ein substituiertes Phenol aufgefasst, sondern wird aufgrund seiner besonderen Bedeutung in Gummierungsmischungen in obiger Liste separat aufgeführt.

Bevorzugt ist eine erfindungsgemäße Kautschukmischung, vorzugsweise wie als bevorzugt beschrieben, wobei
die substituierten Resorcine und/oder die substituierten Phenole unabhängig voneinander mono-Ester, mono-Ether, di-Ester und/oder di-Ether dessen umfassen.

Besonders bevorzugt ist eine erfindungsgemäße Kautschukmischung, vorzugsweise wie als bevorzugt beschrieben, wobei
die substituierten Resorcine Resorcinmonoacetat, Resorcinmonobenzoat, Resorcinmonorosinat, Resorcindiphenylether, Resorcinmonomethylether und/oder Benzoylresorcin umfassen
   und/oder
die substituierten Phenole 1,2-Dihydroxybenzol (Brenzcatechin), 1,4-Dihydroxybenzol (Hydrochinon), 1,2,3-Trihydroxybenzol (Pyrogallol), 1,2,4-Trihydroxybenzol (Hydroxyhydrochinon), 1,3,5-Trihydroxybenzol (Phloroglucin), 2-Methylphenol (*ortho*-Kresol), 3-Methylphenol (*meta*-Kresol), 4-Methylphenol (*para-*Kresol), 1,2-Hydroxybenzolcarbamate, 1,3-Hydroxybenzolcarbamate, 1,4-Hydroxybenzolcarbamate, Hydroxydiphenylamin (HDPA) und/oder N-(Hydroxyphenyl)maleimid umfassen.

Besonders bevorzugt ist eine erfindungsgemäße Kautschukmischung, vorzugsweise wie als bevorzugt beschrieben, wobei gemäß (e) das Reaktionspaar, die Vorkondensate und/oder die Harze daraus ein Novolak und/oder ein Alnovol umfasst. Dabei handelt es sich im Kontext der vorliegenden Erfindung um besonders bevorzugte Vorkondensate. Novolak bildet eine Gruppe von Vorkondensaten, die auf Formaldehyd und Phenolen (insbesondere substituierte Phenole) basieren bzw. daraus (weitestgehend) aufgebaut sind. Besonders bevorzugte substituierte Phenole umfassen dabei Kresole, vorzugsweise *meta-* und/oder para-Kresol. Ein Novolak selbst weist vorzugsweise äußerst geringe Restmengen freies Formaldehyd auf. Alnovol bildet eine Gruppe von Vorkondensaten, die auf Formaldehyd und Phenol basieren bzw. daraus (weitestgehend) aufgebaut sind und zusätzlich einen Substituenten umfassen, vorzugsweise über Methylengruppen angebundene Carbamat-Gruppen. Auch ein Alvonol weist vorzugsweise äußerst geringe Restmengen freies Formaldehyd auf.

Besonders bevorzugt ist eine erfindungsgemäße Kautschukmischung, vorzugsweise wie als bevorzugt beschrieben, wobei gemäß (e) das Reaktionspaar, die Vorkondensate und/oder die Harze daraus Formaldehyd, Hexamethylentetramin (HMTA), Hexamethoxymethylmelamin (HMMM), Phenol, substituierte Phenole und/oder Resorcin, umfassen bzw. darauf basieren. Am bevorzugtesten umfasst (e), vorzugsweise besteht daraus, ein Reaktionspaar umfassend Hexamethoxymethylmelamin (HMMM) und Resorcin, Vorkondensate bzw. Harze daraus.

Im Kontext der vorliegenden Erfindung ist Formaldehyd, Hexamethylentetramin (HMTA) und Hexamethoxymethylmelamin (HMMM) vorzugsweise ein Methylen-Donor, wohingegen Resorcin, substituierte Resorcine, Phenol, substituierte Phenole vorzugsweise ein Methylen-Akzeptor sind. In einigen Fällen sind die Verbindungen sowohl Donor als auch Akzeptor, beispielsweise Hexamethoxymethylmelamin (HMMM). In den meisten Fällen ist es jedoch bevorzugt, dass das mindestens eine Methylen-Donor / Methylen-Akzeptor Reaktionspaar, die Vorkondensate und/oder die Harze daraus auf zwei oder mehr als zwei verschiedenen Verbindungen beruhen.

Bevorzugt ist eine erfindungsgemäße Kautschukmischung, wobei Bestandteil (e) in einer Gesamtmenge in einem Bereich von 1 bis 17 phr vorliegen, vorzugsweise von 2 bis 14 phr, weiter bevorzugt von 3 bis 11, am bevorzugtesten von 4,5 bis 9 phr.

Bevorzugt ist eine erfindungsgemäße Kautschukmischung, vorzugsweise wie als bevorzugt beschrieben, wobei Bestandteil (e)
einen oder mehr als einen Methylen-Donor in einer Gesamtteilmenge, d.h. als Teilmenge der Gesamtmenge (e), in einem Bereich von 0,5 bis 10 phr aufweist, vorzugsweise von 1 bis 8 phr, weiter bevorzugt von 1,5 bis 6 phr, am bevorzugtesten von 2 bis 5 phr,
   und
einen oder mehr als einen Methylen-Akzeptor in einer Gesamtteilmenge, d.h. als Teilmenge der Gesamtmenge (e), in einem Bereich von 0,5 bis 7 phr, vorzugsweise von 1 bis 6 phr, weiter bevorzugt von 1,5 bis 5 phr, am bevorzugtesten von 2 bis 4 phr.

Insbesondere in Verbindung mit einem metallischen Festigkeitsträger bildet die Kombination der Bestandteile (e) und (f) ein bevorzugtes System zur Haftverbesserung.

Die erfindungsgemäße Kautschukmischung umfasst zudem vorzugsweise
(g) einen oder mehr als einen Weichmacher.

Bevorzugt ist eine erfindungsgemäße Kautschukmischung, vorzugsweise wie vorstehend und/oder nachstehend als bevorzugt beschrieben, wobei der eine oder mehr als eine Weichmacher gemäß (g) ausgewählt ist aus der Gruppe bestehend aus Ölen und Harzen. Bevorzugte Öle umfassen Mineralöle und/oder Pflanzenöle wobei Pflanzenöle besonders bevorzugt sind. In einigen Fällen umfasst ein besonders bevorzugtes Pflanzenöl Rapsöl. Pflanzenöle umfassen typischerweise Triglyceride. Bevorzugte Mineralöle umfassen aromatische, naphthenische und/oder paraffinische Mineralöle. Insbesondere bevorzugte Mineralöle umfassen MES (mild extraction solvate), DAE (Destillated Aromatic Extracts), RAE (Residual Aromatic Extract), TDAE (treated distillate aromatic extract), und Rubberto-Liquid-Öle (RTL). In einigen Fällen ist besonders bevorzugt eine Kombination aus einem oder mehr als einem Mineralöl und einem oder mehr als einem Pflanzenöl.

Bevorzugt ist eine erfindungsgemäße Kautschukmischung, vorzugsweise wie vorstehend und/oder nachstehend als bevorzugt beschrieben, wobei der eine oder mehr als eine Weichmacher gemäß (g) in der Kautschukmischung in einer Gesamtmenge im Bereich von 1 bis 20 phr vorliegt, bevorzugt von 1,5 bis 15 phr, besonders bevorzugt von 2 bis 10 phr, ganz besonders bevorzugt von 2,5 bis 7 phr, am bevorzugtesten von 3 bis 6 phr.

Bevorzugte Harze umfassen Kohlenwasserstoffharze oder natürliche Harze. Besonders bevorzugt umfassen die Harze eines aus der Gruppe bestehend aus AMS Harzen, Terpenharzen, Phenolharzen, Cumaron-Inden-Harzen, aliphatischen Kohlenwasserstoffharzen, aromatischen Kohlenwasserstoffharzen und natürlichen Harzen. Sofern Harze als Bestandteil der Weichmacher eingesetzt werden, liegt deren Gesamtmenge vorzugsweise in einem Bereich von 0,5 bis 4 phr. Ein solcher vergleichsweise geringer Harzanteil wirkt sich in einigen Fällen vorteilhaft auf die Rissbeständigkeit aus.

Bevorzugt ist eine erfindungsgemäße Kautschukmischung, vorzugsweise wie vorstehend und/oder nachstehend als bevorzugt beschrieben, umfassend einen oder mehr als einen weiteren Zusatzstoff. Hierbei handelt es sich vorzugsweise um übliche Zusatzstoffe in den typischen Mengen, die bei der Herstellung einer entsprechenden Kautschukmischung vorzugsweise in wenigstens eine Grundmischstufe zugegeben werden.

Vorzugsweise umfasst der eine oder mehr als eine weitere Zusatzstoff:
i) Alterungsschutzmittel, vorzugsweise umfassend *para*-Phenylendiamine und/oder Dihydrochinoline; besonders bevorzugt ausgewählt aus der Gruppe bestehend aus N-Phenyl-N'-(1,3-dimethylbutyl)-p-phenylendiamin (6PPD), N,N'-Diphenyl-p-phenylendiamin (DPPD), N-(1-phenylethyl)-N'-phenyl-p-phenylendiamin (SPPD), N,N'-Ditolyl-p-phenylendiamin (DTPD), N-(1,4-dimethylpentyl)-N'-phenyl-p-phenylendiamin (7PPD), N-Isopropyl-N'-phenyl-p-phenylendiamin (IPPD), und 2,2,4-Trimethyl-1,2-dihydrochinolin (TMQ);
ii) einen Aktivator; vorzugsweise umfassend Zinkverbindungen (inklusive Zinkkomplexe) und/oder Fettsäuren; besonders bevorzugt umfassend Zinkoxid, Stearinsäure und/oder Zinkethylhexanoat;
iii) Agenzien für die Anbindung von Füllstoffen (insbesondere für Ruße und Kieselsäuren); vorzugsweise umfassend S-(3-Aminopropyl)-Thioschwefelsäure, deren Metallsalze (besonders für die Anbindung an Ruß) und/oder Silan-Kupplungsagenzien (besonders für die Anbindung an Siliciumdioxid, insbesondere an Kieselsäure);
iv) Ozonschutzwachse;
v) Harze, vorzugsweise Klebharze, die keine Weichmacherharze sind;
vi) Mastikationshilfsmittel; vorzugsweise umfassend 2,2'-Dibenzamidodiphenyldisulfid (DBD); und/oder
vii) Prozesshilfsmittel; vorzugsweise umfassend Fettsäureester und/oder Metallseifen, wobei bevorzugte Metallseifen Zinkseifen und/oder Calciumseifen umfassen.

Bei den Silan-Kupplungsagenzien (siehe iii) oben) handelt es sich vorzugsweise um alle dem Fachmann bekannte Typen. Vorzugsweise umfasst die erfindungsgemäße Kautschukmischung, vorzugsweise wie vorstehend und/oder nachstehend als bevorzugt beschrieben, ein oder mehr als ein Silan-Kupplungsagenz. In manchen Fällen umfasst die erfindungsgemäße Kautschukmischung vorzugsweise ein Gemisch verschiedener Silan-Kupplungsagenzien. Der Einsatz von Silan-Kupplungsagenzien ist daher insbesondere bevorzugt, sofern als Füllstoff mindestens eine Kieselsäure eingesetzt wird.

Silan-Kupplungsagenzien reagieren mit den oberflächlichen Silanolgruppen des Siliciumdioxids (insbesondere der Kieselsäure) oder anderen polaren Gruppen, entweder während des Mischens des Kautschuks bzw. der Kautschukmischung (*in situ*) oder bereits vor der Zugabe dessen zum Kautschuk während einer Vorbehandlung (Vormodifizierung).

Bevorzugte Silan-Kupplungsagenzien umfassen bifunktionale Organosilane, die am Siliciumatom mindestens eine Alkoxy-, Cycloalkoxy- oder Phenoxygruppe als Abgangsgruppe besitzen und als zusätzliche Funktionalität eine Gruppe aufweisen, die (gegebenenfalls nach Spaltung) eine chemische Reaktion mit den Doppelbindungen des Polymers eingehen kann. Bevorzugte Gruppen umfassen -SCN, -SH, -NH₂ und/oder -Sₓ-(mit x = 2 bis 8). Silan-Kupplungsagenzien mit einer -SH Gruppe werden typischerweise auch als Mercaptosilane bezeichnet. Bevorzugte Mercaptosilane umfassen geblockte Mercaptosilane, vorzugsweise gemäß WO 99/09036 A1. Der Einsatz solcher Mercaptosilane als Kupplungsagenzien sind im Kontext der vorliegenden Erfindung besonders bevorzugt und daher vorzugsweise in der erfindungsgemäßen Kautschukmischung enthalten. Diese liegen entweder in freier Form vor oder bereits mit Anbindung an den Kieselsäure-Füllstoff (Vormodifizierung), vorzugsweise in freier Form. Weiter bevorzugt ist eine erfindungsgemäße Kautschukmischung, vorzugsweise wie vorstehend und/oder nachstehend als bevorzugt beschrieben, umfassend ein geblocktes Mercaptosilan, vorzugsweise ein geblocktes Mercaptosilan umfassend einen Alkanoylrest, besonders bevorzugt ein geblocktes Mercaptosilan umfassend einen Octanoylrest. Bevorzugte Alkanoylreste umfassen 2 bis 12 Kohlenstoffatome, vorzugsweise 4 bis 10, besonders bevorzugt 6 bis 9.

Besonders bevorzugte Silan-Kupplungsagenzien umfassen 3-Mercaptopropyltriethoxysilan, 3-Thiocyanato-propyltrimethoxysilan, 3,3'-Bis(triethoxysilylpropyl)polysulfide mit 2 bis 8 Schwefelatomen (besonders bevorzugt 3,3'-Bis(triethoxysilylpropyl)tetrasulfid (TESPT) und/oder dessen Disulfid (TESPD)) und/oder Gemische der Sulfide mit vorzugsweise jeweils unterschiedlicher Anzahl an Schwefelatomen. In einigen Fällen ist TESPT bevorzugt, besonders bevorzugt als Gemisch mit Industrieruß (Handelsname X50S^{®} der Firma Evonik).

Bevorzugte Silan-Kupplungsagenzien umfassen, zusätzlich oder alternativ, auch solche gemäß WO 2008/083241 A1, WO 2008/083242 A1, WO 2008/083243 A1 und/oder WO 2008/083244 A1. Weitere bevorzugte Silan-Kupplungsagenzien, zusätzlich oder alternativ, umfassen unter dem Namen NXT in verschiedenen Varianten von der Firma Momentive, USA, vertriebene Silane (vorzugsweise 3-Octanoylthio-1-propyltriethoxysilan) und/oder unter dem Namen VP Si 363^{®} von der Firma Evonik Industries vertriebene Silane.

Bevorzugt ist eine erfindungsgemäße Kautschukmischung, vorzugsweise wie vorstehend und/oder nachstehend als bevorzugt beschrieben, wobei der eine oder mehr als eine weitere Zusatzstoff in einer Gesamtmenge im Bereich von 1 bis 50 phr umfasst ist, bevorzugt von 2 bis 40 phr, weiter bevorzugt von 3 bis 30 phr, am bevorzugtesten von 4 bis 20 phr.

Bevorzugt ist eine erfindungsgemäße Kautschukmischung, vorzugsweise wie vorstehend und/oder nachstehend als bevorzugt beschrieben, wobei das eine oder mehr als eine Silan-Kupplungsagenz in einer Gesamtmenge im Bereich von 1 bis 50 phf (Gewichtsteile, bezogen auf 100 Gewichtsteile Kieselsäure) umfasst ist, bevorzugt von 2 bis 40 phf, weiter bevorzugt von 3 bis 30 phf, noch weiter bevorzugt von 4 bis 20 phf, am bevorzugtesten von 5 bis 14 phf. Die hier verwendete Angabe phf (parts per hundred parts of filler by weight) ist dabei die in der Kautschukindustrie gebräuchliche Mengenangabe für Kupplungsagenzien für Füllstoffe. Im Kontext der vorliegenden Erfindung bezieht sich phf auf die Gesamtmenge an Kieselsäure als Füllstoff, das heißt, dass andere eventuell vorhandene Füllstoffe wie Ruß nicht in der Berechnung berücksichtigt werden.

Bevorzugt ist eine erfindungsgemäße Kautschukmischung, vorzugsweise wie vorstehend und/oder nachstehend als bevorzugt beschrieben, umfassend einen oder mehr als einen Aktivator (siehe ii) oben); vorzugsweise eine Zinkverbindung, besonders bevorzugt Zinkoxid. Hinsichtlich der Typen an Zinkoxid gibt es vorzugsweise keine Einschränkung. Bevorzugt ist ein Granulat und/oder ein Pulver. Bevorzugt besitzt das Zinkoxid eine BET-Oberfläche bis zu 100 m²/g, vorzugsweise in einem Bereich von 1 bis 100 m²/g. In einigen Fällen ist ein Zinkoxid bevorzugt, wobei die BET-Oberfläche kleiner 10 m²/g ist. In anderen Fällen ist ein Zinkoxid bevorzugt, wobei die BET-Oberfläche im Bereich von 10 bis 100 m²/g liegt, besonders bevorzugt sind sogenannte "nano-Zinkoxide". Vorzugsweise liegt der eine oder mehr als eine Aktivator, insbesondere bevorzugt die Zinkverbindung, in einer Gesamtmenge vor in einem Bereich von 1 bis 15 phr, vorzugsweise von 2 bis 12 phr, am bevorzugtesten von 4 bis 10 phr.

Die erfindungsgemäße Kautschukmischung ist schwefelvernetzbar, d.h. vulkanisierbar, wobei im Kontext der vorliegenden Erfindung beide Begriffe bedeutungsgleich und somit synonym sind. In Kombination mit einem Festigkeitsträger ist die erfindungsgemäße Kautschukmischung vorzugsweise vulkanisiert oder zumindest teilvulkanisiert, vorzugsweise vulkanisiert. Dies bedeutet, dass sie vorzugsweise vulkanisiert oder mindestens teilvulkanisiert zur Anwendung kommt, besonders bevorzugt als Gummierung für einen oder mehr als einen Festigkeitsträger in einem Fahrzeugreifen bzw. Fahrzeugluftreifen. Dem Fachmann ist jedoch selbstverständlich klar, dass bis zur maßgeblichen Verarbeitung bzw. Verwendung die Kautschukmischung typischerweise nicht vulkanisiert vorliegt.

Die Vulkanisation bzw. das Vulkanisieren der erfindungsgemäßen Kautschukmischung erfolgt bevorzugt in Anwesenheit von Schwefel und/oder Schwefelspendern, vorzugsweise unter Mitwirkung von Vulkanisationsbeschleunigern, wobei vorzugsweise einige Vulkanisationsbeschleuniger zugleich Schwefelspender sind.

Bevorzugt ist eine erfindungsgemäße Kautschukmischung, vorzugsweise wie vorstehend und/oder nachstehend als bevorzugt beschrieben, zusätzlich umfassend
(h) Schwefel und/oder einen oder mehr als einen Schwefelspender.

Hinsichtlich der Schwefelspender gibt es keine besondere Einschränkung, so dass grundsätzlich alle für den Fachmann bekannten Schwefelspender in Betracht kommen, solange sie unter den vorliegenden Bedingungen Schwefel in entsprechender Form zur Verfügung stellen. Der eine oder mehr als eine Schwefelspender ist vorzugsweise ausgewählt aus der Gruppe bestehend aus Thiuramdisulfiden, Thiuramtetrasulfiden, Dithiophosphaten, und Polysulfiden. Bevorzugte Thiuramdisulfide umfassen Tetrabenzylthiuramdisulfid (TBzTD), Tetramethylthiuramdisulfid (TMTD) und/oder Tetraethylthiuramdisulfid (TETD). Bevorzugte Thiuramtetrasulfide umfassen Dipentamethylenthiuramtetrasulfid (DPTT). Bevorzugte Dithiophosphate umfassen Bis(diisopropyl)thiophosphoryldisulfid (DIPDIS), Zinkdichloryldithiophosphat, und/oder Zinkalkyldithiophosphat. Bevorzugte Polysulfide umfassen Bis(O,O-2-ethylhexyl-thiophosphoryl)polysulfid, Diarylpolysulfide und/oder Dialkylpolysulfide.

Bevorzugt ist eine erfindungsgemäße Kautschukmischung, wobei der Schwefel und der eine oder mehr als eine Schwefelspender in einer Gesamtmenge in einem Bereich von 0,1 bis 7 phr vorliegt, vorzugsweise von 1 bis 6 phr. Sofern der Festigkeitsträger ein metallischer Festigkeitsträger ist, wird vorzugsweise innerhalb dieser Bereiche ein vergleichsweise hoher Schwefelgehalt eingesetzt. Besonders bevorzugt ist in solch einem Fall eine Gesamtmenge in einem Bereich von 2,1 bis 7 phr, vorzugsweise von 2,5 bis 6,5 phr, weiter bevorzugt von 3 bis 6 phr, am bevorzugtesten von 3,5 bis 5,5 phr. Sofern der Festigkeitsträger ein textiler Festigkeitsträger ist, wird vorzugsweise innerhalb der oben genannten breiten Bereiche ein vergleichsweise niedriger Schwefelgehalt eingesetzt. Besonders bevorzugt ist in solche einem Fall eine Gesamtmenge in einem Bereich von 0,1 bis 5 phr, vorzugsweise von 0,75 bis 4,5 phr, weiter bevorzugt von 1 bis 4 phr, am bevorzugtesten von 1,1 bis 3,4 phr.

Bevorzugt ist eine erfindungsgemäße Kautschukmischung, vorzugsweise wie als bevorzugt beschrieben, umfassend (alternativ oder zusätzlich zu einem Schwefelspender) einen oder mehr als einen Vulkanisationsbeschleuniger.

Bevorzugte Vulkanisationsbeschleuniger umfassen Thiazolbeschleuniger, Mercaptobeschleuniger, Sulfenamidbeschleuniger, Thiocarbamatbeschleuniger, Thiurambeschleuniger, Thiophosphatbeschleuniger, Thioharnstoffbeschleuniger, Xanthogenat-Beschleuniger, Guanidin-Beschleuniger, und/oder Kombinationen daraus. Besonders bevorzugt sind Sulfenamidbeschleuniger, insbesondere Thiazolsulfenamidbeschleuniger, und Guanidin-Beschleuniger. Besonders bevorzugt ist ein oder mehr als ein Beschleuniger ausgewählt aus der Gruppe bestehend aus N-Cyclohexyl-2-benzothiazolsulfenamid (CBS), N,N-Dicyclohexylbenzothiazol-2-sulfenamid (DCBS), Benzothiazyl-2-sulfenmorpholid (MBS), N-tert-Butyl-2-benzothiazylsulfenamid (TBBS) und Diphenylguanidin (DPG).

Bevorzugt ist eine erfindungsgemäße Kautschukmischung, vorzugsweise wie vorstehend und/oder nachstehend als bevorzugt beschrieben, umfassend einen oder mehr als einen Vulkanisationsverzögerer. Die Anwesenheit eines Vulkanisationsverzögerers trägt beispielsweise zu einem besser ausbalancierten Vulkanisationsverlauf bei.

Die erfindungsgemäße Kautschukmischung wird vorzugsweise hergestellt oder bereitgestellt, besonders bevorzugt hergestellt. Dies erfolgt vorzugsweise nach in der Kautschukindustrie üblichen Verfahren, bei denen zunächst in einer oder mehr als einer Mischstufe eine Grundmischung mit allen Bestandteilen außer (d.h. abzüglich) dem Vulkanisationssystem bereitgestellt wird, wobei das Vulkanisationssystem den Schwefel und die vulkanisationsbeeinflussenden Verbindungen umfasst, d.h. vorzugsweise die Gesamtmenge aus Schwefel, Schwefelspender, Vulkanisationsbeschleuniger und Vulkanisationsverzögerer. Durch Zugabe des Vulkanisationssystems in einer letzten Mischstufe wird eine Fertigmischung erzeugt, welche vorzugsweise durch Extrusion und/oder Kalandrieren weiterverarbeitet und in die gewünschte Form gebracht wird. Die dabei erzielte Form entscheidet vorzugsweise über die anschließende Verwendung, wie z.B. zur Gummierung von Festigkeitsträgern für einen Fahrzeugreifen bzw. Fahrzeugluftreifen.

Die vorliegende Erfindung betrifft zudem einen Festigkeitsträger gummiert mit einer erfindungsgemäßen, aber bereits schwefelvernetzten Kautschukmischung wie vorstehend beschrieben, vorzugsweise wie vorstehend als bevorzugt beschrieben, so dass ein gummierter Festigkeitsträger resultiert. Mit anderen Worten, die erfindungsgemäße Kautschukmischung liegt im erfindungsgemäßen Festigkeitsträger bereits in einem schwefelvernetzten Zustand vor.

Das vorstehend Gesagte zu der erfindungsgemäßen Kautschukmischung, jeweils inklusive bevorzugter Ausgestaltungen, gilt vorzugsweise *mutatis mutandis* auch für den erfindungsgemäßen Festigkeitsträger.

Vorzugsweise umfasst der Festigkeitsträger Filamente, Fasern, Gewebe und/oder Corde.

Besonders bevorzugt ist ein erfindungsgemäßer Festigkeitsträger, wobei der Festigkeitsträger ein textiler Festigkeitsträger, ein metallischer Festigkeitsträger, oder ein Komposit aus einem textilen und metallischen Festigkeitsträger ist.

In einigen Fällen ist ein erfindungsgemäßer Festigkeitsträger bevorzugt, wobei der textile Festigkeitsträger einer oder mehr als einer ist, ausgewählt aus der Gruppe bestehend aus Nylon, Rayon, Polyester, und Aramid. Typischerweise werden Festigkeitsträger, die zwei oder mehr textile Festigkeitsträger umfassen, als Hybridkorde bezeichnet.

In anderen Fällen ist ein erfindungsgemäßer Festigkeitsträger bevorzugt, wobei der metallische Festigkeitsträger ein mit einer Legierung beschichteter oder unbeschichteter Stahlfestigkeitsträger ist. Vorzugsweise ist die Legierung eine Messinglegierung.

Die vorliegende Erfindung betrifft zudem einen Fahrzeugreifen, vorzugsweise einen Fahrzeugluftreifen, der mindestens einen erfindungsgemäßen Festigkeitsträger (wie vorstehend beschrieben, vorzugsweise wie vorstehend als bevorzugt beschrieben) in wenigstens einem Bauteil aufweist, wobei das Bauteil vorzugsweise eine Karkasse, ein Gürtel, und/oder eine Gürtelbandage ist.

Das vorstehend Gesagte zu der erfindungsgemäßen Kautschukmischung bzw. dem erfindungsgemäßen Festigkeitsträger, jeweils inklusive bevorzugter Ausgestaltungen, gilt vorzugsweise *mutatis mutandis* auch für den erfindungsgemäßen Fahrzeugreifen.

Vorzugsweise handelt es sich in vielen Fällen bei dem Bauteil daher um ein inneres Bauteil des erfindungsgemäßen Reifens.

Vorzugsweise ist der erfindungsgemäße Fahrzeugreifen vulkanisiert, d.h. kein Fahrzeugreifenrohling.

Vorzugsweise ist der erfindungsgemäße Fahrzeugreifen, vorzugsweise wie vorstehend und/oder nachstehend als bevorzugt beschrieben, ausgewählt aus der Gruppe bestehend aus Industrie- und Baustellenfahrzeugreifen, LKW-, PKW-, Van- und Zweiradreifen.

Besonders bevorzugt ist ein erfindungsgemäßer Fahrzeugreifen, vorzugsweise wie vorstehend und/oder nachstehend als bevorzugt beschrieben, der die erfindungsgemäße Kautschukmischung für alle Festigkeitsträger aufweist.

Ein entsprechender Reifen weist besonders vorteilhafte Eigenschaften auf (siehe zudem nachfolgende Beispiele). Bevorzugt ist ein erfindungsgemäßer Fahrzeugreifen, vorzugsweise wie vorstehend und/oder nachstehend als bevorzugt beschrieben, welcher mit einer schwefelvernetzten Kautschukmischung gummierte Festigkeitsträger aufweist, wobei die schwefelvernetzte Kautschukmischung eine Shore-Härte A bei 25°C im Bereich von 70 bis 90 aufweist, vorzugsweise von 76 bis 86.

Von der Erfindung sind sämtliche vorteilhaften Ausgestaltungen, die sich unter anderem in den Patentansprüchen widerspiegeln, umfasst. Insbesondere sind von der Erfindung auch Ausgestaltungen umfasst, die sich durch Kombination unterschiedlicher Merkmale, beispielsweise von Bestandteilen der Kautschukmischung, unterschiedlicher Abstufungen bei der Bevorzugung dieser Merkmale ergeben, sodass auch eine Kombination eines ersten als "bevorzugt" bezeichneten Merkmals mit einem weiteren als z. B. "besonders bevorzugt" bezeichneten Merkmal von der Erfindung umfasst ist und als offenbart gilt.

### Beispiele:

Die Erfindung soll nun anhand von Vergleichs- und Ausführungsbeispielen, die in der Tabelle 1 zusammengefasst sind, näher erläutert werden.
1. Darstellung flüssiger Styrol-Butadien-Polymere:

Die nachfolgende Darstellung betrifft das in Tabelle 1 (siehe unten) verwendete "mod. LSBR (flüssig)" mit den Indizes "c" und "d".

In einem ersten Schritt wurden in jeweils einem 3 L Mehrhalskolben 1350 g (für "c") bzw. 1130 g (für "d") L-SBR 822 (Kuraray; unfunktionalisiertes, lösungspolymerisiertes Styrol-Butadien-Copolymer, T_{g} = -62 °C, MW 9600 g/mol, ca. 25% Styrolgehalt, ca. 30% cis-Anteil, ca. 50% trans-Anteil, ca. 20% Vinyl-Anteil; Modifizierungsgrad: 0) unter Vakuum für zwei Stunden bei 90°C entgast und anschließend mit jeweils 50 ml Lösungsmittel Toluol versetzt. Es resultierte eine klare Lösung, die anschließend mit 300 ml (für "c") bzw. 519 ml (für "d") 3-Mercaptopropyltriethoxysilan und jeweils 4,08 g Azobis(isobutyronitril) (AIBN) bei 90°C für 30 Minuten unter Rühren umgesetzt wurde.

Die daraus resultierende Komposition wurde in einem zweiten Schritt anschließend bei 120°C über Nacht gerührt.

In einem dritten Schritt wurde das Lösungsmittel unter Vakuum entfernt und das Reaktionsprodukt bei 50°C unter Hochvakuum getrocknet und ohne weitere Aufreinigung eingesetzt.

Das Reaktionsprodukt wurde mittels Größenausschlusschromatographie (GPC) und Kernresonanzspektroskopie (NMR) charakterisiert (nicht gezeigt). Der Grad der Funktionalisierung wird mittels quantitativer ¹³C-NMR Spektroskopie bestimmt. Dazu werden die Integrale der zur Funktionalisierung gehörenden Signale und die Integrale der Signale des Polymers bestimmt. Aus dem Verhältnis der Integrale ergibt sich der Grad der Funktionalisierung.

### 2. Herstellung einer Kautschukmischung

Nachfolgend werden die unter Punkt 1. hergestellten Polymere in entsprechenden Kautschukmischungen zu Testzwecken verarbeitet. Vergleichsmischungen sind dabei mit "V", erfindungsgemäße Mischungen mit "E" gekennzeichnet.

Die Mischungsherstellung erfolgte nach den in der Kautschukindustrie üblichen Verfahren für Gummierungsmischungen unter weitestgehend üblichen Bedingungen in vier Stufen in einem Labormischer. In einer ersten Mischstufe (Mastikationsstufe) wurden der Naturkautschuk und ein Teil der Kieselsäure miteinander vermischt, gefolgt von einem zweiten Schritt, bei dem der Butadienkautschuk, die Restmenge Kieselsäure, die Weichmacher und Hilfsmittel, sowie das Silan hinzugefügt wurden (Grundmischstufe 1).

In einem dritten Schritt wurden das Resorcin, die Alterungsschutzmittel, das Kobaltsalz (sofern es sich bei dem Festigkeitsträger um einen metallischen Festigkeitsträger handelt; optional, sofern es sich um textile Festigkeitsträger handelt) und das Zinkoxid zugesetzt und eingemischt (Grundmischstufe 2).

In einem vierten Schritt wurden das HMMM, der Schwefel und der Beschleuniger hinzugefügt (Fertigmischstufe; gemischt bei 90 bis 120°C).

Ferner wurden aus sämtlichen Mischungen Prüfkörper durch 20-minütige Vulkanisation unter Druck bei 160 °C hergestellt und typische Materialeigenschaften mit den im Folgenden angegebenen Testverfahren ermittelt:
- Shore-A-Härte bei Raumtemperatur und 70°C mittels Durometer gemäß DIN ISO 7619-1
- Spannungswerte bei 50 und 200% Dehnung bei Raumtemperatur gemäß DIN 53 504
- Auszugskraft Mittelwert; "Pullout Force MEAN" gemäß ISO 5603
- Bedeckung Mittelwert; "Coverage MEAN" gemäß ISO 5603
- Rückprallelastizität bei Raumtemperatur und 70°C gemäß ISO 4662:2017-06
- Mooney Viskosität in Anlehnung an ASTM D 1646-19a
- Verlustfaktor tan δ (d.h. tangens delta) bei 1% Dehnung mittels Eplexortest (Eplexor DKF) auf Basis von DIN 53 513 bei 55°C,

**Tabelle 1, Kautschukmischungen; Mengenangaben in phr**

| **Bestandteile** | **V1** | **V2** | **E1** | **V3** |
|---|---|---|---|---|
| NR^{a} (fest) | 85 | 85 | 85 | 85 |
| BR^{b1} (fest) | 15 | 15 | 15 | 15 |
| unmod. LBR (flüssig)^{b2} | 0 | 0 | 0 | 6 |
| mod. LSBR^{c} (flüssig) | 0 | 6 | 0 | 0 |
| mod. LSBR^{d} (flüssig) | 0 | 0 | 6 | 0 |
| Kieselsäure^{e} | 65 | 65 | 65 | 65 |
| Silan^{f} | 10 | 10 | 10 | 10 |
| Weichmacher + Hilfsmittel^{g} | 9 | 9 | 9 | 9 |
| Alterungsschutzmittel^{h} | 5 | 5 | 5 | 5 |
| Resorcin | 2,5 | 2,5 | 2,5 | 2,5 |
| Zinkoxid | 8 | 8 | 8 | 8 |
| Co-Borat-Alkanolat | 0,4 | 0,4 | 0,4 | 0,4 |
| HMMM (65%) | 4 | 4 | 4 | 4 |
| Beschleuniger^{j} | 1,5 | 1,5 | 1,5 | 1,5 |
| Schwefel (ca. 66%ig)^{k} | 7 | 7 | 7 | 7 |

| | | | | |
|---|---|---|---|---|
| ^{a} SIR20 SED ^{b1} Ubepol BR 150 (Firma: Ube); hoch-cis BR mit einem cis-Anteil von ≥ 98% ^{b2} unfunktionalisiertes LBR (LBR 302; Kuraray): T_{g} = -85 °C, M_{w} ca. 5500 g/mol, ca. 25% Vinyl-Anteil ^{c} Funktionalisiertes LSBR: Funktionalisiertes (Propyl-Triethoxysilyl-Gruppen), lösungspolymerisiertes Styrol-Butadien-Copolymer mit Rückgrat-Funktionalisierungen für die Polymer/Kieselsäure- und Polymer/Ruß-Wechselwirkung; T_{g} = -62 °C, M_{w} ca. 11400 g/mol, ca. 23% Styrolgehalt, ca. 23% cis-Anteil, ca. 59% *trans-Anteil,* ca. 18% Vinyl-Anteil; durchschnittlicher Modifizierungsgrad/100 Monomere: ca. 5,5 ^{d} Funktionalisiertes LSBR: Funktionalisiertes (Propyl-Triethoxysilyl-Gruppen), lösungspolymerisiertes Styrol-Butadien-Copolymer mit Rückgrat-Funktionalisierungen für die Polymer/Kieselsäure- und Polymer/Ruß-Wechselwirkung; T_{g} = -64 °C, M_{w} ca. 13300 g/mol, ca. 19% Styrolgehalt, ca. 23% cis-Anteil, ca. 62% *trans-*Anteil*,* ca. 15% Vinyl-Anteil; durchschnittlicher Modifizierungsgrad/100 Monomere: ca. 11 ^{e} Kieselsäure (Füllstoff): HI-SIL EZ 160 G-D (Firma PPg); BET-Oberfläche: ca. 160 m²/g ^{f}3,3'-Bis(triethoxysilylpropyl)tetrasulfid (TESPT) 50% auf Ruß; entspricht 7,7 phf ^{g} Mischung unter anderem enthaltend RAE-Mineralöl ^{h} Mischung aus DTPD, 6PPD und TMQ ^{j} N,N-Dicyclohexylbenzothiazol-2-sulfenamid (DCBS) ^{k} Crystex OT 33 AS | | | | |

Eine Zusammenfassung der ermittelten Eigenschaften enthält Tabelle 2

**Tabelle 2**

| **Bestandteile** | **V1** | **V2** | **E1** | **V3** |
|---|---|---|---|---|
| Steifigkeit | | | | |
| Shore A Härte (RT) | 86 | 82 | 85 | 85 |
| Shore A Härte (70°C) | 83 | 79 | 82 | 81 |
| M50 (RT) in [MPa] | 2,9 | 2,6 | 2,8 | 2,7 |
| M200 (RT) in [MPa] | 10,2 | 9,4 | 10,1 | 10,1 |

| Rissbeständigkeit | | | | |
|---|---|---|---|---|
| Auszugskraft Mittelwert (Pullout Force MEAN) in [N] | 445 | 428 | 461 | 426 |
| Bedeckung Mittelwert (Coverage MEAN) in [%] | 94 | 97 | 98 | 97 |

| Hysterese | | | | |
|---|---|---|---|---|
| Rückprallelastizität (RT) in [%] | 36 | 37 | 37 | 35 |
| Rückprallelastizität (70°C) in [%] | 46 | 48 | 49 | 44 |
| tan δ (70°C) | 0,181 | 0,166 | 0,166 | 0,192 |

| sonstige Eigenschaften | | | | |
|---|---|---|---|---|
| Mooney (ML1+3) in [MU] | 76 | 63 | 66 | 67 |

Tabelle 2 zeigt, dass die erfindungsgemäße Kautschukmischung E1 gegenüber V1 und V2 weiter verbesserte Eigenschaften aufweist. Der typische Zielkonflikt zwischen Steifigkeit / Rissbeständigkeit auf der einen Seite und verbessertem Rollwiederstand (Hysterese) auf der anderen Seite wird insgesamt auf einem höheren Niveau gelöst.

Obwohl bereits bei V2 ein besonders vorteilhafter tan δ (als Maß der Wärmeentwicklung in einem aus einer entsprechenden Kautschukmischung hergestellten, schwefelvernetzten Bauteil) von 0,166 erreicht wird, bleibt V2 in anderen Eigenschaften wie Steifigkeit und Rissbeständigkeit zurück. In E1 bliebt dieser vorteilhafte Wert von 0,166 bestehen. Dies wird durch die Rückprallelastizität bestätigt, die von 36 % bzw. 46 % zumindest messbar auf 37 % bzw. 49 % ansteigt (höhere Werte sind generell besser).

Zusätzlich zu dieser vorteilhaften Hysterese zeigt E1 überraschenderweise eine verbesserte Steifigkeit. Die Shore A Härte steigt verglichen mit V2 überraschend wieder an und erreicht mit 85 ShA einen Wert, der fast identisch mit den 86 ShA von V1 ist. Eine erhöhte Shore A Härte wird im Zusammenhang mit der vorliegenden Erfindung typischerweise als eine Erhöhung der Steifigkeit verstanden, die nicht nur eine verbesserte Stabilität entsprechender Bauteile im Reifen bewirkt, sondern zudem auch dessen Haltbarkeit verlängert. Eine solche erhöhte Steifigkeit ist insbesondere in einer Gummierungsmischung zur Verbesserung der Haltbarkeit wünschenswert.

Diese Beobachtung bestätigt sich auch bei den Spannungswerten bei 50 und 200 % Dehnung. Obwohl der Vergleich zwischen V1 und V2 zunächst einen signifikanten Abfall der Spannungswerte zeigt (2,9 auf 2,6 bzw. 10,2 auf 9,4), steigen diese bei E1 überraschend wieder an und erreichen ein Niveau fast identisch mit V1 (2,8 vs. 2,9 bzw. 10,1 vs. 10,2).

Ein etwas gegenläufiges Bild zeigt sich beim Vergleich von V3 mit E1. V3 enthält einen flüssigen BR jedoch ohne Modifizierung, d.h. der Modifizierungsgrad ist Null. Es zeigt sich, dass V3 bereits sehr akzeptable Steifigkeitswerte aufweist, wobei bei Shore A (RT) und M200 sogar identische Werte erreicht werden. Auffällig ist jedoch, dass eine besonders schlechte Hysterese von 0,192 erzielt wird. Dies ist aus den vergleichsweise niedrigen Rückprallelastizitäten (mit 35 bzw. 44 sogar niedriger als in V1) bereits erwartbar. Somit ist ein unfunktionalisierter, flüssiger BR sehr ungünstig für die Hysterese.

Folglich ist mit E1 eine Verbesserung des Rollwiderstandes möglich, ohne dabei Kompromisse bei der Steifigkeit hinnehmen zu müssen.

Eine tatsächliche Leistungssteigerung betrifft die Rissbeständigkeit, ausgedrückt durch die Parameter "Pullout Force MEAN" und "Coverage MEAN". Grundsätzlich gilt, dass je höher die Werte sind, desto besser ist die Rissbeständigkeit, wobei das minimale Ziel darin besteht, die Rissbeständigkeit mindestens auf dem Ausgangsniveau zu halten. Hier zeigt E1 überraschend sogar eine Verbesserung nicht nur gegenüber V2 sondern auch V1 und erreicht mit 461 N bzw. 98% sehr gute Werte.

Mit anderen Worten, die erfindungsgemäße Kautschukmischung realisiert die vorteilhafte Steifheit und Rissbeständigkeit der V1 und zeitgleich die verbesserte Hysterese der V2.

Zu den oben genannten Ergebnissen kommt hinzu, dass mit einer Mooney Viskosität von 66 MU zumindest gegenüber V1 eine Verbesserung hinsichtlich der Verarbeitbarkeit einer entsprechenden Kautschukmischung erreicht wird. Lediglich V3 erreicht hier mit 67 einen ähnlich guten Wert.

Somit zeigen die Ergebnisse, dass ein Modifizierungsgrad von 8 oder mehr Organosilizium-Gruppen pro 100 Monomere in einem flüssigen Polymer überraschende und signifikante Auswirkungen hat, indem es den Zielkonflikt zwischen Steifigkeit / Rissbeständigkeit auf der einen Seite und verbessertem Rollwiederstand (Hysterese) auf der anderen Seite auf einem höheren, verbesserten Niveau löst.

## Patentansprüche

1. Eine schwefelvernetzbare Kautschukmischung für die Gummierung eines Festigkeitsträgers, die Mischung umfassend
(a) einen oder mehr als einen Polyisopren-Kautschuk in einer Gesamtmenge in einem Bereich von 40 bis 100 phr;
(b) einen oder mehr als einen von (a) verschiedenen Dienkautschuk in einer Gesamtmenge in einem Bereich von 0 bis 60 phr;
(c) ein oder mehr als ein flüssiges Polymer;
(d) einen oder mehr als einen Füllstoff; und
(e) mindestens ein Methylen-Donor / Methylen-Akzeptor Reaktionspaar, Vorkondensate und/oder Harze daraus;
wobei
das flüssige Polymer gemäß c) mittels Organosilizium-Gruppen organosilizium-modifiziert ist und einen jeweils durchschnittlichen Modifizierungsgrad von 8 oder mehr Organosilizium-Gruppen pro 100 Monomere aufweist.

2. Kautschukmischung nach Anspruch 1 zusätzlich umfassend
(f) mindestens ein organisches und/oder anorganisches Kobaltsalz.

3. Kautschukmischung nach Anspruch 1 oder 2, wobei der eine oder mehr als eine Polyisopren-Kautschuk gemäß (a) mindestens einen natürlichen Polyisopren-Kautschuk (NR) und/oder mindestens einen synthetischen Polyisopren-Kautschuk (IR) umfasst.

4. Kautschukmischung nach einem der Ansprüche 1 bis 3, wobei der eine oder mehr als eine von (a) verschiedenen Dienkautschuk gemäß (b) einen oder mehr als einen Butadien-Kautschuk (BR) umfasst.

5. Kautschukmischung nach einem der Ansprüche 1 bis 4, wobei das eine oder mehr als eine flüssige Polymer gemäß (c) mindestens ein flüssiges Styrol-Butadien-Polymer (LSBR) und/oder mindestens ein flüssiges Polybutadien-Polymer (LBR) umfasst, vorzugsweise jeweils und unabhängig voneinander mit einem zahlenmittleren Molekulargewicht Mₙ gemäß GPC in einem Bereich von 4000 bis 30000 g/mol, vorzugsweise von 5500 bis 27000 g/mol, weiter bevorzugt von 7000 bis 24000 g/mol, wieder weiter bevorzugt von 8500 bis 21000 g/mol, bevorzugter von 10000 bis 18000 g/mol, am bevorzugtesten von 12000 bis 15000 g/mol.

6. Kautschukmischung nach einem der Ansprüche 1 bis 5, wobei die Organosilizium-Gruppen unabhängig voneinander eine Struktur gemäß Formel (I) aufweisen:
(R¹R²R³)Si-X- (I),
wobei jeweils unabhängig voneinander gilt
- R¹, R² und R³ sind ausgewählt aus der Gruppe bestehend aus Methoxy, Ethoxy, Phenoxy, Methyl, Ethyl und Phenyl, wobei jeweils wenigstens eine der Gruppen R¹, R² und R³ Methoxy, Ethoxy oder Phenoxy ist, und
- X ein C₁ bis C₁₈ divalentes Alkylen ist, vorzugsweise ein C₁ bis C₁₄, weiter bevorzugt ein C₁ bis C₁₀, bevorzugter ein C₁ bis C₇, weiter bevorzugter ein C₁ bis C₅, am bevorzugtesten ein C₂ bis C₄, am besonders bevorzugtesten Propylen.

7. Kautschukmischung nach einem der Ansprüche 1 bis 6, wobei das eine oder mehr als eine flüssige Polymer gemäß (c) eine individuelle Glasübergangstemperatur Tg gemäß DSC in einem Bereich von -120 bis -35°C aufweist, bevorzugt von -100 bis - 45°C, weiter bevorzugt von -90 bis -55°C, am bevorzugtesten von -75 bis -58°C.

8. Kautschukmischung nach einem der Ansprüche 1 bis 7, wobei der jeweilige, durchschnittliche Modifizierungsgrad des einen oder mehr als einen flüssigen Polymers gemäß (c) im Bereich von 8 bis 30 liegt, vorzugsweise von 8,5 bis 25, weiter bevorzugt von 9 bis 20, wieder weiter bevorzugt von 9,5 bis 15, am bevorzugtesten von 10 bis 14.

9. Kautschukmischung nach einem der Ansprüche 1 bis 8, wobei der eine oder mehr als eine Füllstoff gemäß (d) in einer Gesamtmenge im Bereich von 20 bis 90 phr vorliegt, vorzugsweise von 30 bis 85 phr, weiter bevorzugt von 40 bis 80 phr, besonders bevorzugt von 50 bis 75 phr, am bevorzugtesten von 52 bis 72 phr.

10. Kautschukmischung nach einem der Ansprüche 1 bis 9, wobei der eine oder mehr als eine Füllstoff gemäß (d) mindestens einen Ruß und/oder mindestens eine Kieselsäure umfasst.

11. Kautschukmischung nach einem der Ansprüche 1 bis 10, wobei gemäß (e) das Reaktionspaar, die Vorkondensate und/oder die Harze daraus Formaldehyd, Hexamethylentetramin (HMTA), Hexamethoxymethylmelamin (HMMM), Resorcin, substituierte Resorcine, Phenol, substituierte Phenole, N-Methyldioxazinane und/oder Aceton umfassen bzw. darauf basieren.

12. Kautschukmischung nach Anspruch 11, wobei
die substituierten Resorcine Resorcinmonoacetat, Resorcinmonobenzoat, Resorcinmonorosinat, Resorcindiphenylether, Resorcinmonomethylether und/oder Benzoylresorcin umfassen
und/oder
die substituierten Phenole 1,2-Dihydroxybenzol, 1,4-Dihydroxybenzol, 1,2,3-Trihydroxybenzol, 1,2,4-Trihydroxybenzol, 1,3,5-Trihydroxybenzol, 2-Methylphenol, 3-Methylphenol, 4-Methylphenol, 1,2-Hydroxybenzolcarbamate, 1,3-Hydroxybenzolcarbamate, 1,4-Hydroxybenzolcarbamate, Hydroxydiphenylamin (HDPA) und/oder N-(Hydroxyphenyl)maleimid umfassen.

13. Einen Festigkeitsträger gummiert mit einer schwefelvernetzten Kautschukmischung nach einem der Ansprüche 1 bis 12, so dass ein gummierter Festigkeitsträger resultiert.

14. Festigkeitsträger nach Anspruch 13, wobei der Festigkeitsträger ein textiler Festigkeitsträger, ein metallischer Festigkeitsträger, oder ein Komposit aus einem textilen und metallischen Festigkeitsträger ist.

15. Einen Fahrzeugreifen, vorzugsweise ein Fahrzeugluftreifen, der mindestens einen Festigkeitsträger nach einem der Ansprüche 13 oder 14 in wenigstens einem Bauteil aufweist, wobei das Bauteil vorzugsweise eine Karkasse, ein Gürtel, und/oder eine Gürtelbandage ist.
